# EUROPÄISCHE PATENTSCHRIFT

(11) **EP 0 685 190 B1**
(45) Veröffentlichungstag und Bekanntmachung des Hinweises auf die Patenterteilung: **05.07.2000**
(21) Anmeldenummer: 95105107.7
(22) Anmeldetag: 05.04.1995
(51) Int. Cl.: A47B 91/00, A47B 13/02

(54) **Gestell mit Rohrsäule und Standfuss**
Frame with tubular columns and supporting foot
Cadre avec colonnes tubulaires et pied d'appui

(30) Priorität: 18.05.1994 DE 4417339
(43) Veröffentlichungstag der Anmeldung: 06.12.1995
(73) Patentinhaber: Sedus Stoll AG, 79761 Waldshut-Tiengen (DE)
(72) Erfinder: Hurst, Siegfried, D-79725 Laufenburg (DE)
(74) Vertreter: Lück, Gert, Dr.

(56) Entgegenhaltungen:
- WO-A-86/05373
- DE-A- 2 412 478
- DE-U- 9 300 489
- FR-A- 2 466 965

## Beschreibung

Die Erfindung betrifft eine Anordnung nach dem Oberbegriff des Anspruchs 1.

Aus produktions- und transporttechnischen Gründen ist es zweckmässig, die Standsäule und den Standfuss eines Gestelles, insbesondere des Untergestells eines Büro- oder Arbeitstisches, einzeln herzustellen und vorzugsweise lösbar miteinander zu verbinden. Bei offener C-Gestellbauweise eines Bürotisches, insbesondere eines Schreibtisches, stellt dies aber sehr hohe Anforderungen an die Steifigkeit der Verbindung zwischen Standsäule und Standfuss. Denn die Verbindung muss ggfs. die Kippmomente aufnehmen, die sich z.B. dann ergeben, wenn eine oder gar zwei Personen auf der vorderen Tischkante aufsitzen.

Eine Klemmung der Säule im Standfuss, bei einer optisch vertretbaren Klemmhöhe, würde die Steifigkeit nicht gewährleisten.

Auch die bekannten Vorrichtungen werden den genannten Anforderungen nicht gerecht:
Die US-PS 5026010 beschreibt ein Tisch-Untergestell mit einer Standsäule , die oben und unten mit Manschetten versehen ist, die in konische Sockel eingeklemmt werden. Die Manschetten sind vorzugsweise aus Polypropylen hergestellt.

Die DE-OS 2410099 beschreibt eine besondere Ausgestaltung eines Säulenfusses für Tische, bei welchem sich radial nach aussen erstreckende Elemente in Scheibenelemente eingehängt werden können. Die Fixierung der Radialelemente in den Scheibenelementen erfolgt mittels einer Zugstange , die sich durch die ganze Säule hindurch erstreckt .

Das DE-GM 9017722.3 beschreibt einen Stützfuss für ein Gerätegehäuse, der einen Ausstellfuss mit einer Verriegelungseinrichtung umfasst, mittels derer er in mehreren Drehstellungen relativ zum Gehäusefuss verriegelbar ist.

Das DE-GM 6751236 beschreibt einen Mehrzweckständer insbesondere für Sonnenschirme. Die in Blatt 2 dargestellte Klemmbefestigung besteht aus einem Standrohr mit einem eingepressten Teil . Das zu befestigende Rohr - zum Beispiel des Sonnenschirms - wird mittels eines beweglichen Teils verkeilt.

Die FR-PS 1403015 beschreibt eine Vorrichtung, die konische Elemente umfasst, und zum Feststellen von Korpussen bzw. Tablaren an Standrohren dient.

Das DE-GM 9310808.7 schliesslich zeigt einen Standfuss mit einer Steckbuchse , die zur Aufnahme einer Stange dient. In der Steckbuchse sind ferner Adapter für unterschiedliche Stangendurchmesser vorgesehen.

Des weiteren ist aus der DE-A 2412478 eine Anordnung zur Befestigung einer Rohrsäule eines Gestelles in einem Standfuss bekannt, bei welcher in das untere Ende der Rohrsäule eine Scheibe mit einer zentralen Gewindebohrung eingeschweisst ist, die auf einem Verbindungsstück aufliegt in welches nach aussen ragende Füsse eingehängt sind. Das Verbindungsstück weist einen sich nach oben vejüngenden Stützkonus mit umlaufender Rinne auf, in welche Rinne die Rohrsäule eingesetzt ist. Ferner weist diese Anordnung zum Verspannen des Verbindungsstückes mit der Rohrsäule am unteren Ende des Verbindungsstückes ein Verankerungsorgan auf, das über einen in die Gewindebohrung der Scheibe eingreifenden Gewindebolzen angespannt wird.

Der Erfindung liegt daher die Aufgabe zugrunde, die Anordnung zur Befestigung der Rohrsäule im Standfuss so zu gestalten, dass sie einerseits für die industrielle Serienproduktion geeignet und möglichst kostengünstig herzustellen, sowie vor Ort einfach zu montieren und zu demontieren ist, andererseits aber auch hohe Kippmomente aufzunehmen vermag.

Diese Aufgabe wird durch die Merkmale des Anspruchs 1 gelöst.

Der Kern der Erfindung besteht darin, mittels des vorzugsweise in seiner Neigung optimierten Stützkonus und der aufzubringenden Spannhülse, deren untere Kante in die Innenwandung der Rohrsäule eindringt, einen Formschluss zwischen Fuss und Standsäule herzustellen.

Nachstehend wird die Erfindung anhand eines Ausführungsbeispieles näher beschrieben.

Dabei zeigt
Fig.1 einen Querschnitt der erfindungsgemässen Anordnung, und
Fig.2 eine Ansicht von unten der in Fig.1 dargestellten Anordnung, unter Weglassung des Standfusses und der Rohrsäule.

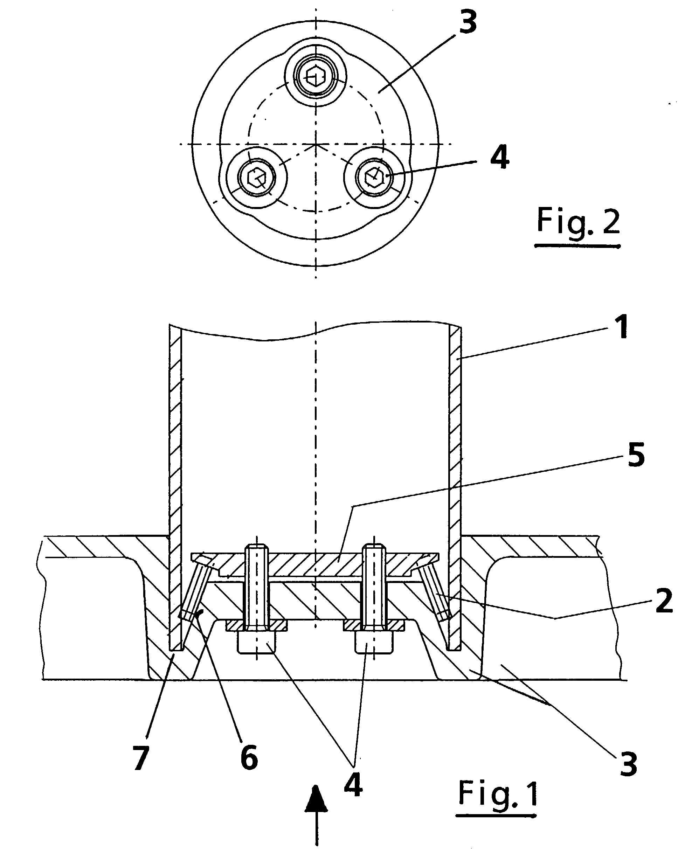

In Fig.1 ist der Standfuss 3 dargestellt, der vorzugsweise aus Aluminium-Druckguss besteht. Der Standfuss 3 weist einen Konus 6 auf, um den herum eine Rinne 7 läuft. In diese Rinne 7 ist die Rohrsäule 1 eingesetzt, die vorzugsweise aus .Aluminium besteht.

Auf dem Konus 6 sitzt nun die Spannhülse 2, die aus einem gleichfalls konisch geformten, geschlitzten Rohrstück aus Stahl besteht.

Diese Spannhülse 2 kann mittels der auf ihrem oberen Rand aufliegendem Scheibe, des Spannflansches 5, und der Schrauben 4 auf den Stützkonus 6 aufgespannt werden. Dabei drückt ihre untere, äussere Kante gegen die Innenwandung der Rohrsäule 1, und da ihr Material härter ist als das der Rohrsäule 1, dringt diese Kante in das Material der Rohrsäule 1 ein. Damit ergibt sich über die Spannhülse 2 ein Formschluss zwischen dem Aluminium-Fuss 3 und der Rohrsäule 1, der zur Aufnahme grösster Kräfte bzw. Kippmomente geeignet ist. Wie sich gezeigt hat, ist die Neigung des Konus-Mantels eine kritische Grösse: Ist sie zu flach, so wird die in Richtung des Konus-Mantels wirkende Kraft-Komponente der von den Schrauben 4 erzeugten Spannkraft zu klein; ist sie jedoch zu steil, so wird die senkrecht zur Rohrsäule 1 wirkende, für das Eindringen der Kante der Spannhülse 2 in die Innenwandung der Rohrsäule 1 massgebende Kraft-Komponente zu klein.

Um diese sich widersprechenden Anforderungen zu optimieren, ist es vorteilhaft, wenn der Winkel zwischen der Neigung des Konus-Mantels und der Rohrsäule zwischen 20° und 45° liegt. Weiterhin ist es für die Stabilität der Konstruktion zweckmässig, wenn die Spannhülse 2 mit etwa 2/3 ihres Mantels auf dem Stützkonus 6 aufliegt.

Damit die erfindungsgemässe Anordnung optisch nicht zu klobig wird, andererseits aber die erforderlichen grossen Kippmomente aufgenommen werden können, empfiehlt sich ein Durchmesser der Rohrsäule von 80....120 mm.

Die Vorteile der Anordnung nach der Erfindung bestehen im wesentlichen darin, dass sie sehr kostengünstig herstellbar ist, weil der Stützkonus 6 im Standfuss 3 angegossen werden kann, Spannhülse 2 und Spannflansch 5 gleichfalls sehr einfach und damit billig herstellbar sind, und die Spannelemente 4 preiswerte Normschrauben sind. Des weiteren kann die Anordnung sehr einfach transportiert, montiert und demontiert werden, und nimmt dennoch sehr hohe Kippmomente auf.

### Bezugszeichen

- 1: Rohrsäule
- 2: Spannhülse
- 3: Standfuss
- 4: Spannelemente
- 5: Spannflansch
- 6: Stützkonus
- 7: Rinne

## Patentansprüche

1. Anordnung zur Befestigung der Rohrsäule (1) eines Gestelles, vorzugsweise des Untergestells eines Büro- oder Arbeitstisches, in einem Standfuss (3), wobei der Standfuss (3) einen sich nach oben verjüngenden Stützkonus (6) mit umlaufender Rinne (7) umfasst, in welche Rinne (7) die Rohrsäule (1) eingesetzt ist, dadurch gekennzeichnet, dass auf dem Stützkonus (6) eine aus einem konisch geformten, geschlitzten Rohrstück bestehende Spannhülse (2) sitzt, auf deren oberem Rand ein Spannflansch (5) aufliegt, der unter der Wirkung von Spannelementen (4) auf die Spannhülse (2) eine Kraft ausüben kann.

2. Anordnung nach Anspruch 1, dadurch gekennzeichnet, dass der Spannflansch (5) eine kreisförmige Scheibe ist, die auf dem oberen Rand des Spannflansches (5) aufliegt, und mittels dreier, symmetrisch zueinander angeordneter, den Zentralteil des Stützkonus (6) durchtretender, als Spannelemente (4) wirkender Schrauben auf die Spannhülse (2) gepresst wird.

3. Anordnung nach Anspruch 1, dadurch gekennzeichnet, dass die Spannhülse (2) mit etwa 2/3 ihres Mantels auf dem Stützkonus (6) aufliegt.

4. Anordnung nach Anspruch 1, dadurch gekennzeichnet, dass die Neigung des Mantels des Stützkonus (6) zur Wandung der Rohrsäule (1) einen Winkel zwischen 20° und 45° bildet.

5. Anordnung nach Anspruch 1, dadurch gekennzeichnet, dass die Spannhülse (2) aus einem härteren Material besteht als die Innenwandung der Rohrsäule (1).

6. Anordnung nach Anspruch 1, dadurch gekennzeichnet, dass der Standfuss (3) mit seinem Stützkonus (6) aus Aluminium-Druckguss, die Rohrsäule (1) aus Aluminium und die Spannhülse (2) aus Stahl besteht.

7. Anordnung nach Anspruch 1, dadurch gekennzeichnet, dass für einen Norm-Büro- oder Arbeitstisch der Durchmesser der Rohrsäule (1) zwischen 80 mm und 120 mm liegt.

## Claims

1. Arrangement for fastening the tubular column (1) of a frame, preferably the substructure of an office table or work table, in a supporting foot (3), the supporting foot (3) comprising an upwardly tapering supporting cone (6) with encircling channel (7), into which channel (7) the tubular column (1) is inserted, characterized in that seated upon the supporting cone (6) is a clamping sleeve (2) which comprises a conically shaped, slit tube element and on the top border of which there rests a clamping flange (5) which, under the action of clamping elements (4), can exert a force on the clamping sleeve (2).

2. Arrangement according to Claim 1, characterized in that the clamping flange (5) is a circular disc which rests on the top border of the clamping flange (5) [sic] and is pressed onto the clamping sleeve (2) by means of three screws which are arranged symmetrically in relation to one another, pass through the central part of the supporting cone (6) and act as clamping elements (4).

3. Arrangement according to Claim 1, characterized in that the clamping sleeve (2) has approximately 2/3 of its lateral surface resting on the supporting cone (6).

4. Arrangement according to Claim 1, characterized in that the inclination of the lateral surface of the supporting cone (6) in relation to the wall of the tubular column (1) forms an angle of between 20° and 45°.

5. Arrangement according to Claim 1, characterized in that the clamping sleeve (2) consists of a harder material than the inner wall of the tubular column (1).

6. Arrangement according to Claim 1, characterized in that the supporting foot (3) with its supporting cone (6) consists of aluminium diecasting, the tubular column (1) consists of aluminium and the clamping sleeve (2) consists of steel.

7. Arrangement according to Claim 1, characterized in that, for a standard office table or work table, the diameter of the tubular column (1) is between 80 mm and 120 mm.

## Revendications

1. Dispositif pour la fixation de la colonne tubulaire (1) d'un cadre, de préférence du cadre inférieur d'une table de bureau ou de travail, dans un pied d'appui (3), dans lequel le pied d'appui (3) comprend un cône de support (6) s'amincissant de bas en haut, avec une gorge périphérique (7), gorge (7) dans laquelle la colonne tubulaire (1) est engagée, caractérisé en ce que, sur le cône de support (6), est posée une douille de serrage (2) composée d'une pièce tubulaire fendue de forme conique, sur le bord supérieur de laquelle repose une bride de serrage (5), qui peut exercer un effort sur la douille de serrage (2) sous l'action d'éléments de serrage (4).

2. Dispositif suivant la revendication 1, caractérisé en ce que la bride de serrage (5) est un disque circulaire, qui repose sur le bord supérieur de la bride de serrage (5), et qui est pressée sur la douille de serrage (2) au moyen de trois vis agissant comme éléments de serrage (4) disposées symétriquement les unes par rapport aux autres et traversant la partie centrale du cône de support (6).

3. Dispositif suivant la revendication 1, caractérisé en ce que la douille de serrage (2) porte par environ 2/3 de sa surface latérale sur le cône de support (6).

4. Dispositif suivant la revendication 1, caractérisé en ce que l'inclinaison de la surface latérale du cône de support (6) par rapport à la paroi de la colonne tubulaire (1) forme un angle compris entre 20° et 45°.

5. Dispositif suivant la revendication 1, caractérisé en ce que la douille de serrage (2) se compose d'une matière plus dure que la paroi intérieure de la colonne tubulaire (1).

6. Dispositif suivant la revendication 1, caractérisé en ce que le pied d'appui (3) avec son cône de support (6) est constitué d'aluminium moulé sous pression, la colonne tubulaire (1) d'aluminium et la douille de serrage (2) d'acier.

7. Dispositif suivant la revendication 1, caractérisé en ce que, pour une table de bureau ou de travail normalisée, le diamètre de la colonne tubulaire (1) est compris entre 80 mm et 120 mm.
